# DEMANDE DE BREVET EUROPEEN

(11) **EP 2 985 562 A1**
(43) Date de publication de la demande: **17.02.2016**
(21) Numéro de dépôt: 15178152.3
(22) Date de dépôt: 23.07.2015
(51) Int. Cl.: F28F 9/22, F28D 7/16, F28D 20/02, B60K 11/00, F28D 20/00

(54) **BATTERIE THERMIQUE DE STOCKAGE COMPRENANT UN COMPOSANT ADAPTE POUR STOCKER ET LIBERER UNE QUANTITE DETERMINEE DE CHALEUR**

(30) Priorité: 28.07.2014 FR 1457261
(71) Demandeur: VALEO SYSTEMES THERMIQUES, 78320 Le Mesnil Saint-Denis (FR)
(72) Inventeur: TISSOT, Julien, 92800 PUTEAUX (FR); AZZOUZ, Kamel, 75012 PARIS (FR); DE VAULX, Cédric, 78310 MAUREPAS (FR)
(74) Mandataire: Metz, Gaëlle

(57) **Abrégé**

La présente invention concerne une batterie thermique de stockage (10) adaptée pour stocker et libérer une quantité déterminée de chaleur comprenant un conteneur (11) et un faisceau de stockage encapsulé au sein dudit conteneur, ledit faisceau de stockage comprenant au moins un composant (20) adapté pour stocker et libérer une quantité déterminée de chaleur, ledit composant comprenant un matériau à changement de phase (MCP) enveloppé dans une capsule de forme cylindrique.

## Description

### Domaine de l'invention

La présente invention concerne une batterie thermique de stockage comprenant un composant adapté pour stocker et libérer une quantité déterminée de chaleur, plus précisément, un composant se présentant sous la forme d'un matériau à changement de phase (MCP). La batterie thermique de stockage est particulièrement adaptée pour une utilisation dans un véhicule automobile.

### Etat de la technique

L'utilisation d'un dispositif comprenant un composant adapté pour stocker et libérer une quantité déterminée de chaleur est déjà connu dans l'art antérieur. Un tel dispositif est notamment utilisé dans un véhicule automobile, par exemple sous la forme d'une batterie thermique.

Une batterie thermique est, par exemple, utilisée pour diffuser de la chaleur, via le système de chauffage, dans l'habitacle d'un véhicule automobile hybride, c'est-à-dire combinant un moteur fonctionnant grâce à l'énergie thermique et à l'énergie électrique. Par ailleurs, ce type de batterie thermique peut servir à préchauffer un fluide caloporteur, l'huile du moteur ou l'huile de la boîte de vitesse automatique, et ce avant le démarrage à froid dudit véhicule automobile.

Lors de l'utilisation d'une batterie thermique avec un véhicule électrique, le chargement de ladite batterie thermique est, en principe, réalisé lors du chargement de la batterie électrique. La batterie électrique sert au déplacement dudit véhicule électrique. Lors d'un déplacement ultérieur dudit véhicule électrique, l'énergie thermique stockée dans la batterie thermique peut être utilisée lors de la mise en marche du système de chauffage au sein de l'habitacle du véhicule automobile. Le système de chauffage pour chauffer l'habitacle d'un véhicule automobile fonctionne à l'aide d'un fluide tel qu'un fluide caloporteur. Afin de chauffer l'habitacle du véhicule automobile, la batterie thermique réchauffe le fluide caloporteur avant son passage à l'intérieur du radiateur de chauffage qui permet de transférer le fluide caloporteur à l'intérieur de l'habitacle. L'énergie fournie par la batterie thermique permet donc d'économiser l'énergie correspondante stockée par la batterie électrique. En d'autres termes, le fonctionnement du chauffage au sein de l'habitacle n'impacte pas l'autonomie du véhicule électrique.

L'utilisation d'une batterie thermique avec un véhicule hybride permet, d'une part, de stocker l'énergie thermique, lors du chargement de la batterie électrique, et, d'autre part, de recharger la batterie thermique, via le fluide caloporteur, lorsque le moteur du véhicule hybride bascule en mode thermique.

Lors de l'utilisation d'une batterie thermique avec un véhicule muni d'un moteur à combustion interne, l'énergie thermique stockée à l'intérieur de la batterie thermique provient de l'énergie produite lors d'un précédent roulage dudit véhicule. Les fluides utilisés pour refroidir le moteur ou la boîte de vitesse automatique par exemple, peuvent être utilisé pour charger la batterie thermique. En effet, l'huile de la boîte de vitesse automatique rejette, dans un usage classique, une quantité déterminée de chaleur. Ladite quantité déterminée de chaleur peut être stockée dans une batterie thermique et ensuite utilisée lors du démarrage du véhicule automobile pour permettre l'augmentation rapide de la température de l'huile de moteur et/ou de l'huile de la boîte de vitesse automatique, réduisant ainsi les frottements dus à la viscosité de ladite huile. En effet, la viscosité de l'huile est d'autant plus élevée que la température est basse. Si la température de l'huile n'augmente pas rapidement, notamment concernant l'huile de la boîte de vitesse automatique, les frottements entraînent une surconsommation de carburant lors des premières minutes de l'utilisation du véhicule. La batterie thermique peut être utilisée dans des circuits d'huile de boîte de vitesse automatique, de fluide caloporteur, ou d'huile de moteur.

L'art antérieur divulgue des batteries thermiques pour lesquelles la chaleur est stockée au sein de matériaux, tels que des matériaux à changement de phase (MCP). Les matériaux de type MCP sont, en règle générale, intégrés sous forme de granulés. Les granulés peuvent être composés de matériaux composites uniformes ou de matériaux de type MCP et encapsulés dans des coquilles dont la nature du matériau diffère de celle du matériau de type MCP. Ainsi, les coquilles peuvent être réalisées en métal ou en plastique.

Les différents types de conditionnement d'un matériau de type MCP, utilisés selon l'art antérieur, génèrent les difficultés suivantes :
- une capacité de stockage d'une quantité déterminée de chaleur limitée, due au trop faible rapport entre le volume de matériau de type MCP et le volume de matériau nécessaire pour l'encapsulage,
- une dispersion du matériau de type MCP de type composite par le fluide caloporteur, nécessitant l'utilisation de dispositif de type éponge bleue afin d'éviter le colmatage des grilles de maintien,
- un phénomène de sédimentation limitant fortement le coefficient d'échange de chaleur entre le fluide caloporteur et le matériau de type MCP.

Il apparaît que des modifications, permettant d'améliorer les capacités de stocker et de libérer une quantité déterminée de chaleur à l'intérieur d'une batterie thermique, s'avèrent nécessaires afin d'augmenter l'efficacité d'un tel dispositif lors de son utilisation.

### Objet de l'invention

Selon l'invention, le dispositif permettant de stocker et de libérer une quantité déterminée de chaleur vise à améliorer les possibilités de stocker de la chaleur, et tout particulièrement de stocker une quantité déterminée de chaleur au sein d'un composant comprenant un matériau de type MCP.

A cet effet, la présente invention concerne une batterie thermique de stockage adaptée pour stocker et libérer une quantité déterminée de chaleur comprenant un conteneur et un faisceau de stockage encapsulé au sein dudit conteneur, ledit faisceau de stockage comprenant au moins un composant adapté pour stocker et libérer une quantité déterminée de chaleur, ledit composant comprenant un matériau à changement de phase (MCP) enveloppé dans une capsule de forme cylindrique.

Selon un mode de réalisation de la présente invention, le faisceau de stockage comprend une pluralité de composants positionnés les uns parallèles aux autres.

Selon un mode de réalisation de la présente invention, les composants sont maintenus à l'intérieur du conteneur à l'aide d'éléments de soutien sur lesquels sont fixées les extrémités desdits composants.

Selon un mode de réalisation de la présente invention, la batterie thermique de stockage est pourvue d'éléments de guidage permettant de guider le fluide lors de sa circulation entre l'entrée et la sortie de la batterie thermique de stockage et d'imposer un chemin audit fluide.

Selon un mode de réalisation de la présente invention, le composant comprend une quantité déterminée de matériau à changement de phase (MCP), dans lequel le matériau à changement de phase est contenu à l'intérieur d'un tube en forme de cylindre.

Selon un mode de réalisation de la présente invention, le tube en forme de cylindre comprend un matériau adapté pour les soudures thermiques.

### Brève descriptions des dessins

Les but, objet et caractéristiques de la présente invention ainsi que ses avantages apparaîtront plus clairement à la lecture de la description ci-dessous, des modes de réalisation préférés d'une batterie thermique de stockage permettant de stocker et de libérer une quantité déterminée de chaleur selon l'invention, faite en référence aux dessins dans lesquels :
- la figure 1 montre une vue, en perspective éclatée, d'une batterie thermique de stockage, selon l'invention,
- la figure 2 représente en détail un mode de réalisation d'une batterie thermique de stockage permettant de fixer des composants pour stocker et libérer de la chaleur à l'intérieur de la batterie thermique de stockage, et
- les figures 3, 4 et 5 montrent une vue en coupe de la batterie thermique de stockage selon les figures 1 et 2 avec des exemples de configuration spatiale des composants au sein de la batterie thermique de stockage pour permettre le stockage et la libération de la chaleur.

### Description détaillée de l'invention

La description détaillée ci-après a pour but d'exposer l'invention de manière suffisamment claire et complète, notamment à l'aide d'exemples, mais ne doit en aucun cas être regardée comme limitant l'étendue de la protection aux modes de réalisations particuliers et aux exemples présentés ci-après.

Il convient de noter que la présente description mentionne le terme « composant » pour désigner tout matériau adapté pour stocker une quantité déterminée de chaleur et échanger ladite chaleur avec un fluide tel qu'un fluide caloporteur.

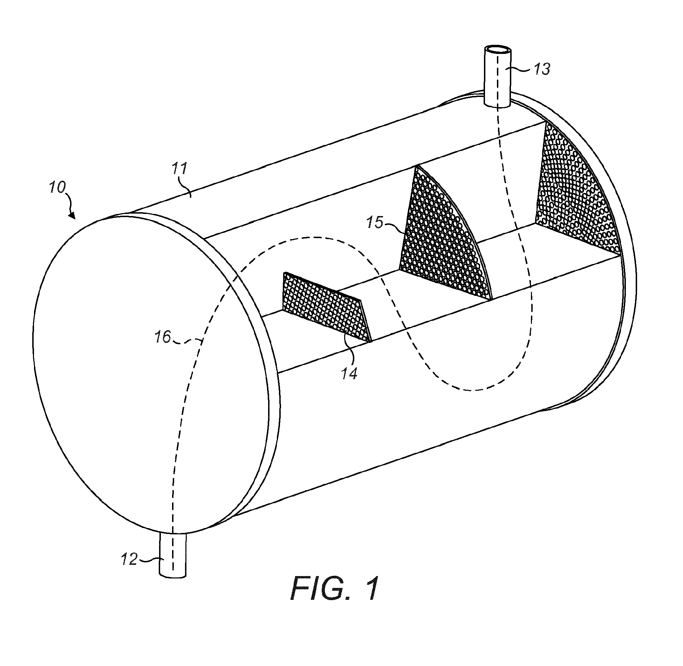

La figure 1 montre une vue, en perspective éclatée, d'une batterie thermique de stockage 10 selon la présente invention. La batterie thermique de stockage 10 comprend un conteneur 11 formant la paroi extérieure de ladite batterie thermique de stockage 10. Selon la figure 1, le conteneur 11 se présente sous la forme d'un cylindre. La batterie thermique de stockage 10 est pourvue d'au moins une entrée 12. Ainsi, un fluide, adapté pour un échange de chaleur avec les éléments présents à l'intérieur de la batterie thermique de stockage 10, peut pénétrer à l'intérieur de la batterie thermique de stockage 10 par l'entrée 12. La batterie thermique de stockage 10 présente au moins une sortie 13 pour ledit fluide. Ainsi, le fluide peut s'extraire de la batterie thermique de stockage 10 par la sortie 13.

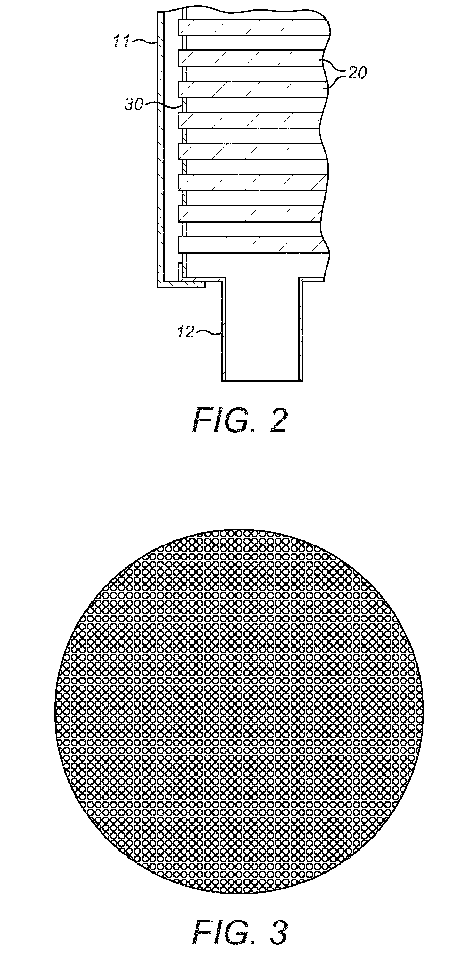

Comme montré sur la figure 2, la batterie thermique de stockage 10 dispose, en son sein, d'un ou plusieurs composants 20 présents sous forme d'un ou plusieurs faisceaux de stockage adaptés pour stocker et libérer une quantité déterminée de chaleur. Chaque composant 20 peut échanger de la chaleur avec un fluide circulant de l'entrée 12 de la batterie thermique de stockage vers la sortie 13. Lors de la circulation du fluide, ledit fluide peut également échanger de la chaleur avec les différents composants 20. Dans le cas où le fluide présente une température plus élevée que le composant 20, ledit composant 20 peut stocker une quantité déterminée de chaleur, diminuant ainsi la température dudit fluide. Alternativement, dans le cas où le fluide présente une température inférieure à celle du composant 20, ledit fluide peut être chauffé à l'aide de la quantité de chaleur stockée dans le composant 20, ladite chaleur pouvant être libérée et transférée vers le fluide.

Selon la présente invention, les composants 20 permettant de stocker et de libérer une quantité déterminée de chaleur comprennent un matériau à changement de phase (MCP). Par définition, un matériau de type MCP peut contenir des cristaux, dans son état solide, et peut, après avoir reçu une quantité déterminée de chaleur, changer d'état pour passer à un état liquide. Le matériau de type MCP, dans son état liquide, comprend ainsi une quantité de chaleur relativement importante qui, en contact avec un fluide présentant une température moins élevée, peut être transmise audit fluide permettant ainsi au fluide de retrouver son état solide initial.

Les composants 20 présents dans la batterie thermique de stockage 10 selon l'invention se présentent sous une forme longitudinale. En d'autres termes, chaque composant 20 se présente sous la forme d'un tube d'une longueur plus importante que son diamètre. Les différents composants 20 sont positionnés les uns à côté des autres de manière à, d'une part, optimiser le remplissage de l'espace intérieur de la batterie thermique de stockage 10 et, d'autre part, permettre à un fluide de se déplacer, de l'entrée 12 vers la sortie 13 au sein de ladite batterie thermique de stockage 10, favorisant ainsi un échange de chaleur avec les différents composants 20.

Lorsque les différents composants 20 sont positionnés les uns par rapport aux autres à l'intérieur de la batterie thermique de stockage 10, des éléments de guidage 14, 15 peuvent être disposés au sein de la batterie de stockage 10 pour former des obstacles à la circulation du fluide, comme montré sur la figure 1. Les éléments de guidage 14, 15 permettent d'imposer un chemin spécifique au fluide qui circule de l'entrée 12 vers la sortie 13 de la batterie thermique de stockage 10. Les éléments de guidage 14, 15 permettent d'allonger le chemin à parcourir pour le fluide. Ainsi, l'échange de chaleur entre les différents composants 20 et le fluide en circulation dans la batterie thermique de stockage 10, est amélioré. Le chemin imposé par les éléments de guidage 14, 15 est représenté sur la figure 1 de façon schématique à l'aide de la ligne en pointillés 16.

La figure 2 montre un mode de réalisation des fixations des extrémités des différents composants 20. La figure 2 représente, de façon schématique, l'entrée 12 de la batterie thermique de stockage 10 ainsi qu'une partie du conteneur 11. Un élément de soutien 30 tel qu'un collecteur est présent à l'intérieur de la batterie thermique de stockage 10. Les extrémités des différents composants 20 sont maintenues par l'élément de soutien 30, par un procédé adapté tel qu'un procédé de pincement, de serrage ou de collage. Le procédé adapté permet d'aligner les différents composants 20 à l'intérieur de la batterie thermique de stockage 10 en assurant l'étanchéité entre les extrémités des composants 20 et l'élément de soutien 30.

De façon alternative, il convient de noter que les composants 20 peuvent être également maintenus par l'élément de soutien 30 par enfilement de longueur de composants, d'une ouverture à l'autre de l'élément de soutien 30, tel qu'un collecteur, sans toutefois couper le matériau.

Les figures 3, 4, 5 montrent différentes configurations spatiales des composants 20 à l'intérieur de la batterie thermique de stockage 10. Le type de configuration spatiale des composants 20 influe sur le volume d'écoulement du fluide caloporteur et la quantité de composants 20 présents à l'intérieur de la batterie thermique de stockage 10. Par conséquent, selon la configuration spatiale des composants 20, la quantité d'énergie stockée à l'intérieur de la batterie thermique de stockage 10 varie, la perte de charge ainsi que le coefficient de convection peuvent varier.

Selon l'invention, les différents composants comprennent un matériau de type MCP enveloppé par un matériau de forme cylindrique tel qu'un tube, ledit matériau de forme cylindrique pouvant être composé de tout matériau adapté tel qu'un matériau plastique, avec de préférence un plastique adapté à la soudure thermique. A l'intérieur du tube, par exemple composé de matériau plastique, se trouve le matériau de type MCP. Selon un aspect de l'invention, les différents composants de type MCP sont tout d'abord produits selon un tube initial d'une longueur déterminée dans lequel lesdits composants de type MCP sont encapsulés à l'aide d'un matériau de forme cylindrique. Ainsi, un composant de type MCP forme un fil ou un « spaghetti », le matériau plastique étant à l'extérieur du fil et le matériau de type MCP étant à l'intérieur dudit fil.

La figure 3 représente une configuration spatiale pour laquelle les tubes de matériau de type MCP sont alignés.

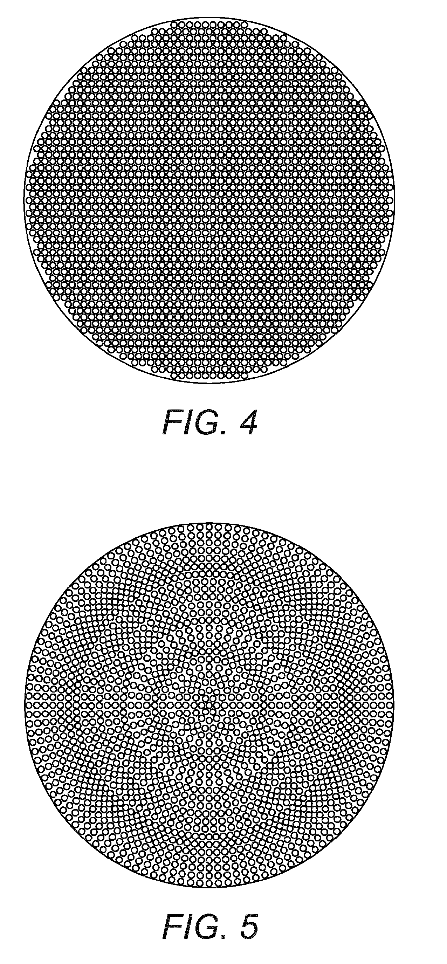

La figure 4 représente une configuration spatiale pour laquelle les tubes de matériau de type MCP sont disposés en quinconce.

La figure 5 représente une configuration spatiale pour laquelle les tubes de matériau de type MCP sont disposés de manière circulaire.

La quantité de matériau de type MCP peut atteindre un seuil maximal de remplissage de 90% au sein de la batterie thermique de stockage 10. L'entre-axes entre deux tubes de matériau de type MCP peut être adapté pour correspondre à des contraintes relatives à une perte de charge ou à une quantité spécifique d'énergie stockée.

Lors de la fabrication d'une batterie thermique de stockage, le tube initial formé peut être découpé selon la longueur adaptée aux dimensions intérieures de ladite batterie thermique de stockage à produire. Les extrémités de chaque composant peuvent être obturées par soudure thermique à l'aide d'un couteau chauffant ou un dispositif permettant d'obtenir une fonctionnalité équivalente.

Lorsque le tube initial est coupé dans le sens de sa longueur, les composants individuels ainsi obtenus, sont disposés à l'intérieur de la batterie thermique de stockage selon les configurations spatiales montrées sur les figures 3, 4 et 5.

Une quantité déterminée de chaleur peut être stockée à l'intérieur du composant comprenant ce matériau à changement de phase (MCP). Lorsque la quantité déterminée de chaleur doit être utilisée, le dispositif selon la présente invention est adapté pour libérer ladite quantité déterminée de chaleur lorsque ledit dispositif est en contact avec un fluide, lui-même adapté pour un échange de chaleur avec le composant du dispositif.

## Revendications

1. Batterie thermique de stockage (10) adaptée pour stocker et libérer une quantité déterminée de chaleur comprenant un conteneur (11) et un faisceau de stockage encapsulé au sein dudit conteneur, ledit faisceau de stockage comprenant au moins un composant (20) adapté pour stocker et libérer une quantité déterminée de chaleur, ledit composant comprenant un matériau à changement de phase (MCP) enveloppé dans une capsule de forme cylindrique.

2. Batterie thermique de stockage (10) selon la revendication 1, dans laquelle le faisceau de stockage comprend une pluralité de composants (20) positionnés les uns parallèles aux autres.

3. Batterie thermique de stockage (10) selon la revendication 2, dans laquelle lesdits composants (20) sont maintenus à l'intérieur du conteneur à l'aide d'éléments de soutien sur lesquels sont fixées les extrémités desdits composants (20).

4. Batterie thermique de stockage (10) selon l'une des revendications précédentes, dans laquelle ladite batterie thermique de stockage (10) est pourvue d'éléments de guidage (14, 15) permettant de guider le fluide lors de sa circulation entre l'entrée et la sortie de la batterie thermique de stockage et imposer un chemin (16) audit fluide.

5. Composant (20) adapté pour stocker et libérer une quantité déterminée de chaleur au sein d'une batterie thermique de stockage (10) selon l'une des revendications 1 à 4, ledit composant (20) comprenant une quantité déterminée de matériau à changement de phase (MCP), dans lequel le matériau à changement de phase est contenu à l'intérieur d'un tube en forme de cylindre.

6. Composant (20) selon la revendication 5, dans lequel le tube en forme de cylindre comprend un matériau adapté pour les soudures thermiques.
